# EUROPÄISCHE PATENTSCHRIFT

(11) **EP 3 327 672 B1**
(45) Veröffentlichungstag und Bekanntmachung des Hinweises auf die Patenterteilung: **22.05.2019**
(21) Anmeldenummer: 17198075.8
(22) Anmeldetag: 24.10.2017
(51) Int. Cl.: G06T 7/593, G06T 7/269

(54) **VERFAHREN UND VORRICHTUNG ZUR ERMITTLUNG EINER ZUORDNUNG ZWISCHEN EINEM MATRIXELEMENT EINER MATRIX UND EINEM VERGLEICHSMATRIXELEMENT EINER VERGLEICHSMATRIX MITTELS SCHREIBPROZESS IN MEHREREN KORRESPONDENZTABELLEN**
METHOD AND DEVICE FOR DETERMINING AN ASSOCIATION BETWEEN A MATRIX ELEMENT OF A MATRIX AND A COMPARISON MATRIX ELEMENT OF A COMPARISON MATRIX BY WRITING IN MULTIPLE CORRESPONDENCE TABLES
PROCÉDÉ ET DISPOSITIF DE DÉTERMINATION D'UNE AFFECTATION ENTRE UN ÉLÉMENT DE MATRICE D'UNE MATRICE ET UN ÉLÉMENT DE MATRICE DE COMPARAISON D'UNE MATRICE DE COMPARAISON AU MOYEN DE L'ÉCRITURE DANS DES PLUSIEURS TABLEAUX DE CORRESPONDANCE

(30) Priorität: 23.11.2016 DE 102016223074
(43) Veröffentlichungstag der Anmeldung: 30.05.2018
(73) Patentinhaber: Robert Bosch GmbH, 70442 Stuttgart (DE)
(72) Erfinder: Simon, Stephan, 31079 Sibbesse (DE)

(56) Entgegenhaltungen:
- WO-A2-2005/048195
- STEIN F: "Efficient Computation of Optical Flow Using the Census Transform", ELECTRONIC PUBLISHING, ARTISTIC IMAGING, AND DIGITAL TYPOGRAPHY; [LECTURE NOTES IN COMPUTER SCIENCE , ISSN 0302-9743], SPRINGER VERLAG, DE, Bd. 3175, 1. August 2004 (2004-08-01), Seiten 79-86, XP002334021, ISBN: 978-3-540-24128-7
- NELSON YEN-CHUNG CHANG ET AL: "Algorithm and Architecture of Disparity Estimation With Mini-Census Adaptive Support Weight", IEEE TRANSACTIONS ON CIRCUITS AND SYSTEMS FOR VIDEO TECHNOLOGY, INSTITUTE OF ELECTRICAL AND ELECTRONICS ENGINEERS, USA, Bd. 20, Nr. 6, 1. Juni 2010 (2010-06-01), Seiten 792-805, XP011304975, ISSN: 1051-8215
- ROSTAM AFFENDI HAMZAH ET AL: "Literature Survey on Stereo Vision Disparity Map Algorithms", JOURNAL OF SENSORS, Bd. 2016, 1. Januar 2016 (2016-01-01), Seiten 1-23, XP055409626, US ISSN: 1687-725X, DOI: 10.1155/2016/8742920

## Beschreibung

### Stand der Technik

Die vorliegende Erfindung betrifft ein Verfahren zur Ermittlung einer Zuordnung zwischen einem Matrixelement einer Matrix und einem Vergleichsmatrixelement einer Vergleichsmatrix sowie eine entsprechende Vorrichtung.

Insbesondere bei kamerabasierten Systemen werden Vergleiche von Elementen von zwei Matrizen durchgeführt und Zuordnungen zwischen den Elementen erstellt. Beispielsweise können die Matrix und die Vergleichsmatrix jeweils ein erstes und zweites Bild repräsentieren. Die Bildung von Zuordnung oder Korrespondenzen werden im Bereich der Computervision, insbesondere beim optischen Fluss oder bei der Stereo-Disparität eingesetzt. Beim optischen Fluss werden Korrespondenzen in zeitlicher Richtung gebildet, um zu ermitteln, wie sich die Projektion eines Punktes in einer 3D-Szene in ein 2D-Bild von einer alten Koordinate zu einer neuen Koordinate weiterbewegt hat. Dabei kann die Bewegung im Bild durch die Bewegung des Szenenpunktes oder durch die Bewegung einer Kamera hervorgerufen werden oder durch beides gleichzeitig.

Bei der Stereo-Vision werden verschiedene Bilder und Korrespondenzen zwischen einzelnen Bildpunkten verwendet, um zeitgleiche Bilder von zwei Kameras zu erfassen, die an unterschiedlichen Orten angeordnet sind. Die relative Anordnung der Kameras ist in der Regel bekannt und fest. Durch Korrespondenzbildung lässt sich so eine Entfernung zu einem Punkt in der 3D-Szene ermitteln.

Aus der DE 11 2009 001 727 B4, der DE 10 2014 009 522 A1 und der DE 10 2013 224 502 A1 sind Verfahren zur Bildverarbeitung und zur Berechnung von Korrespondenzen bekannt, wobei eine Korrespondenz von Bildpunkten in unterschiedlichen Bildern erzeugt werden. Während die beiden ersten Druckschriften auf einen optischen Fluss gerichtet sind, befasst sich die letztgenannte Druckschrift mit Bildern einer Stereokamera.

Dokument WO 2005/048195 A2 offenbart ein Verfahren zur Verarbeitung von Bilddaten bewegter Szenarien mittels einer Signaturtabelle. Die Signaturtabelle weist für jedes Pixel eines Bildes berechnete Signaturstrings und jeweilige Pixelkoordinaten des Pixels auf.

### Offenbarung der Erfindung

Das erfindungsgemäße Verfahren zur Ermittlung einer Zuordnung zwischen einem Matrixelement einer Matrix und einem Vergleichsmatrixelement einer Vergleichsmatrix mittels mehrerer Korrespondenztabellen, deren Tabellenfelder in einem Schreibprozess wenigstens teilweise beschrieben sind, umfasst in einem ersten Schritt das Aufteilen der Matrix in eine Mehrzahl von Submatrizen, wobei jeder Submatrix eine der Korrespondenztabellen zugeordnet ist. Ein weiterer Schritt beinhaltet das Ausführen eines Schreibprozesses zum Schreiben der Position eines Matrixelements einer Submatrix in ein Tabellenfeld der zugeordneten Korrespondenztabelle. Weiterhin erfolgt das Ausführen eines Leseprozesses beim Lesen der Position eines Matrixelements aus einem Tabellenfeld einer Korrespondenztabelle und das Erstellen einer Zuordnung zwischen einer Position eines Vergleichsmatrixelements und eines Matrixelements.

Der Schreibprozess umfasst die Schritte des Auslesens eines Merkmals eines Matrixelements einer Submatrix der Matrix, das Ermitteln eines Zugriffsmerkmals aus dem Merkmal des Matrixelements, das Ermitteln eines Tabellenfeldes der zugehörigen Korrespondenztabelle aus dem Zugriffsmerkmal und das Schreiben der Position des Matrixelements der Submatrix der Matrix in das ermittelte Tabellenfeld der zugehörigen Korrespondenztabelle. Vor Ausführung des Leseprozesses umfasst das erfindungsgemäße Verfahren das Aufteilen der Vergleichsmatrix in eine Mehrzahl von Vergleichssubmatrizen, die jede einer der Korrespondenztabellen zugeordnet ist.

Der Leseprozess umfasst das Auslesen eines Merkmals eines Vergleichsmatrixelements einer Vergleichssubmatrix der Vergleichsmatrix, das Ermitteln eines Zugriffsmerkmals aus dem Merkmal des Vergleichsmatrixelements, das Ermitteln eines Tabellenfeldes der zugehörigen Korrespondenztabelle mittels des Zugriffsmerkmals des Vergleichsmatrixelements sowie das Auslesen der hinterlegten Position des Matrixelements aus dem ermittelten Tabellenfeld der zugehörigen Korrespondenztabelle. Das Erstellen der Zuordnung erfolgt durch den Schritt des Bildens einer Zuordnung zwischen der aus dem Tabellenfeld der zugehörigen Korrespondenztabelle ausgelesenen Position des Matrixelements und der aktuellen Position des Vergleichsmatrixelements der Vergleichsmatrix. Das Ermitteln des Merkmals eines Matrixelements der Matrix bzw. des Vergleichsmatrixelements der Vergleichsmatrix kann durch Auslesen oder während der Verarbeitung bzw. während des Verfahrens zeitgesteuert erfolgen, als sogenanntes "on the fly"-Verfahren. Bevorzugt erfolgt das zeitabhängige Ermitteln bei der Bildverarbeitung. Das Merkmal kann erst unmittelbar, wenn es benötigt wird oder einen kurzen Zeitraum bevor es benötigt wird (dann mit Zwischenspeicherung), gebildet werden, beispielsweise wenn es aus der Umgebung eines Pixels ermittelt wird oder wenn es die lokale Umgebung um ein Pixel oder um einen Bildpunkt beschreibt. Die Matrix muss nicht voll besetzt sein, sondern kann Leerstellen aufweisen oder nur teilweise existieren. Beispielsweise kann eine teilbesetzte Matrix vorhanden sein, wenn die Matrixelemente einen Bildpunkt oder ein Pixel repräsentieren.

Das Zugriffsmerkmal kann aus dem Merkmal des Matrixelements ermittelt werden. Es ist aber auch möglich, dass das Zugriffsmerkmal aus mehreren Merkmalen eines oder mehrerer Matrixelemente hergeleitet wird, beispielsweise aus der Umgebung eines Matrixelements.

Das erfindungsgemäße Verfahren ermöglicht den Speicherbedarf zu reduzieren, da die Position eines Matrixelements nur für die entsprechende Korrespondenztabelle eindeutig sein muss. Zu dem wird bei der Ermittlung der Zuordnung zwischen einem Matrixelement einer Matrix und einem Vergleichsmatrixelement einer Vergleichsmatrix weniger Rechenleistung gefordert, da die Suche auf die jeweilige Korrespondenztabelle, die kleiner ist als eine Gesamtkorrespondenztabelle für die gesamte Matrix, beschränkt sein kann. Damit lässt sich die Suche und die Zuordnung beschleunigen. Anders ausgedrückt ist es möglich, größere Matrizen innerhalb der gleichen Zeit zu bearbeiten und zusätzlich die Leistungsaufnahme eines verwendeten Chips, z.B. ASICs, zu reduzieren.

Die Aufteilung in Matrix und Submatrizen bietet eine Möglichkeit der parallelisierten Abarbeitung der einzelnen Matrixelemente und zeigt die sich daraus ergebenden Vorteile wie Geschwindigkeitsgewinn und Leistungsreduktion. Ein weiterer Vorteil liegt darin, dass Überschreibungen in der Korrespondenztabelle seltener auftreten und somit ein möglicher Verlust potenzieller Korrespondenzen bzw. Zuordnungen unwahrscheinlicher wird, je geringer der Durchsatz der jeweiligen Tabelle ist.

Die Unteransprüche zeigen bevorzugte Weiterbildungen der Erfindung.

Es ist vorteilhaft, dass ein Versatz zwischen dem Schreibprozess und dem Leseprozess besteht und der Versatz fest oder variabel ist. Der Versatz kann als zeitliche oder örtliche Verzögerung interpretiert werden.

Vorteilhaft wird der Versatz so gewählt, dass der Leseprozess dem Schreibprozess nacheilt. Hierdurch wird sichergestellt, dass in der Korrespondenztabelle bereits einige Werte (Position von Matrixelementen) eingetragen sind, bevor mit dem Auslesen begonnen wird. Je größer der Versatz ist, desto größer die Wahrscheinlichkeit, dass das gelesene Tabellenfeld einer Korrespondenztabelle schon einen Wert enthält, der mittels des Schreibprozesses eingetragen wurde. Vorteilhafterweise ist der Versatz jedoch klein genug gewählt, um zu verhindern, dass schon ein Überschreiben eines Tabellenfeldes erfolgt ist, weil ein Matrixelement das gleiche Zugriffsmerkmal aufweist wie ein vorhergehendes. Durch geeignete Wahl des Versatzes kann ein Auslesen erfolgen, bevor ein Überschreiben eines Tabellenfeldwertes aufgrund des beschränkten Speichers erfolgt. Der Versatz sollte also nur so groß wie nötig gewählt werden. Beispielsweise bei zeilenweisem Durchlaufen der Matrix wird der Versatz so groß gewählt, dass er von der größten Zeilendifferenz abhängt, für die noch eine Zuordnung auffindbar sein soll.

Vorteilhaft ist es, dass der Versatz fest oder variabel sein kann. Bei einem variablen Versatz kann die größte Zeilendifferenz beispielsweise davon abhängen, welches Matrixelement betrachtet wird. So bietet sich die Möglichkeit, den Versatz so zu wählen, dass die noch zu ermittelnde maximale Zuordnung abhängig von der Position des Matrixelements gemacht wird. Dies kann insbesondere bei der Beobachtung von Szenenpunkten in einem Kamerabild vorteilhaft sein, wenn die gesuchten Bildpunkte unterhalb des Horizonts liegen und die Zuordnung deshalb zum unteren Rand des Bildes weisen. Die Schreib- und Leseprozesse sind dann aneinander anzupassen und gegebenenfalls auszusetzen.

Es ist vorteilhaft, wenn eine Zuweisung zwischen Matrixelement und Submatrix besteht und eine Zuweisung zwischen Vergleichsmatrixelement und Vergleichssubmatrix besteht. Die Zuweisungen können jeweils in einer Lookup-Tabelle hinterlegt werden. So ist für jedes Matrixelement festgelegt, zu welcher bzw. welchen (überlappenden) Submatrizen es gehört. Das gleiche gilt für ein Vergleichsmatrixelement, für das festgelegt ist, zu welcher bzw. welchen Vergleichssubmatrizen es gehört. Für den Schreibprozess bedeutet dies, dass die Position eines Matrixelements nur in die der Submatrix bzw. Submatrizen zugeordneten Korrespondenztabellen eingetragen werden muss. Die Position eines Vergleichsmatrixelements legt die Vergleichssubmatrix und damit die Korrespondenztabelle fest, aus der während des Leseprozesses das entsprechende Matrixelement ausgelesen werden kann. Auf diese Weise lässt sich der Speicherbedarf verringern und die Verarbeitung beschleunigen.

Es ist vorteilhaft, wenn die Matrix ein erstes Bild ist und die Vergleichsmatrix ein zweites Bild. Die Bilder können dabei eine zeitliche Sequenz bilden. Ebenfalls vorteilhaft ist es, wenn das Matrixelement einen Bildpunkt oder ein Pixel in dem ersten Bild repräsentiert und das Vergleichsmatrixelement einen Bildpunkt oder ein Pixel in dem zweiten Bild ist. Die Begriffe "Bildpunkt" und "Pixel" sind derart allgemein aufzufassen, dass darin ein Merkmal (z.B. mit 16 bit) gespeichert sein kann, das die lokale Umgebung um die Position des Pixels beschreibt. Auf diese Weise lässt sich das Verfahren einfach auf eine Bildverarbeitung und kamerabasierte Systeme anwenden.

Vorteilhafterweise beschreibt ein Merkmal eines Matrixelements die Umgebung um ein Matrixelement oder um ein Vergleichsmatrixelement. Folglich ist das Merkmal ein beschreibendes Feature für einen Bildpunkt eines ersten bzw. zweiten Bildes, wenn Matrix und Vergleichsmatrix Bilder einer zeitlichen Abfolge oder Stereobilder sind.

Es ist vorteilhaft, dass ein Zugriffsmerkmal aus dem Merkmal eines Matrixelements bzw. eines Vergleichsmatrixelements gebildet wird. Im einfachsten Fall ist das Merkmal gleich dem Zugriffsmerkmal. Das Zugriffsmerkmal kann beispielsweise die Adresse in der Korrespondenztabelle sein. Zur Bestimmung des Zugriffsmerkmals kann das gesamte Merkmal, ein Teil des Merkmals oder Merkmale mehrerer Matrixelemente bzw. Vergleichsmatrixelemente verwendet werden. Dies kann abhängig davon sein, wie groß beispielsweise der Wertebereich des Merkmals im Vergleich zur Größe, insbesondere zur Länge der Korrespondenztabelle ist. Ist das Merkmal eines Matrixelements im Vergleich zur Länge der Korrespondenztabelle zu klein, können Merkmale mehrerer Matrixelemente zusammengefasst werden, beispielsweise von benachbarten Matrixelementen, um so insbesondere die Umgebung um ein Matrixelement zu beschreiben. Vorteilhaft ist es, auch wenigstens ein ungültiges Zugriffsmerkmal vorzusehen, um die Bildung einer Zuordnung oder Korrespondenz zu verhindern. Dies hat den Vorteil, dass Matrixelemente für die Bildung von Korrespondenzen und Zuordnungen ausgeschlossen werden, für die keine Zuordnung gewünscht ist oder deren Zuordnung absehbar zu keinem Ergebnis führt. Im Falle einer Bildverarbeitung können dies weiße Flächen sein, in denen ein Bildsensor die Sättigung erreicht. Weitere Beispiele sind Flächen, in denen keine signifikante Textur vorhanden ist, die sich vom Rauschen des Sensors abhebt, oder Flächen, die als irrelevant markiert wurden, z.B. der von einer hinter der Windschutzscheibe montierten Kamera erfasste (uninteressante) Bereich der Motorhaube.

Es ist vorteilhaft, wenn ein Tabellenfeld einer Korrespondenztabelle weitere Attribute oder Informationen umfasst. Beispielsweise kann nicht nur die Position eines Matrixelements, sondern auch die Position eines oder mehrerer weiterer Matrixelemente erfasst werden. Zudem ist es vorteilhaft, wenn ein Hinweis gegeben wird, dass eine Position in dem Tabellenfeld bereits überschrieben wurde. In diesem Fall kann vorteilhaft ein Abstandsmaß, z.B. der vertikale Abstand, zu der zuletzt überschriebenen Position vermerkt werden. Daneben können auch sonstige Zusatzinformationen oder weitere Attribute in einem Tabellenfeld hinterlegt werden, um beispielsweise eine bevorzugte Zuordnung oder Korrespondenz zu ermitteln oder um weitere Features wie Objektklassen oder Objektabstände von einem Bild zum anderen weiterzugeben.

Vorteilhaft ist es auch, wenn die in einem Tabellenfeld der Korrespondenztabelle abgelegten weiteren Attribute oder Informationen mittels der Korrespondenztabelle zwischen Matrix und Vergleichsmatrix transportiert werden. Der Transport der Informationen kann in beide Richtungen erfolgen. In der Bildverarbeitung kann die Weitergabe von Attributen und/oder Informationen von Bild zu Bild geschehen und dazu verwendet werden, um einen effizienten Weitertransport zu ermöglichen. Dies kann z.B. ein teures Warping überflüssig machen. Beispielsweise können eine gemessene Größe, wie etwa ein Objektabstand, oder ein Label eines Matrixelements bzw. Pixels, wie etwa eine Objektklasse, von einem Bild zum anderen sehr effizient weitergegeben werden.

Es ist vorteilhaft, wenn eine sequentielle Bearbeitung der Matrix und der Vergleichsmatrix erfolgt. Bei der sequentiellen Verarbeitung werden die einzelnen Matrixelemente bzw. Vergleichsmatrixelemente, beispielsweise zeilenweise oder spaltenweise abgearbeitet, wobei im nächsten Bearbeitungsschritt ein benachbartes Element bearbeitet wird. Die sequentielle Bearbeitung kann sich auf die einzelnen Submatrizen bzw. Vergleichssubmatrizen beschränken oder die gesamte Matrix bzw. Vergleichsmatrix umfassen. Die sequentielle Abarbeitung kann innerhalb der jeweiligen Submatrix beispielsweise zeilenweise erfolgen, beispielsweise beginnend beim oberen linken Element. Eine andere Abarbeitung ist möglich. Die einzelnen Submatrizen können parallel bearbeitet werden.

Durch geeignete Wahl der Verarbeitungsschritte lässt sich eine Optimierung des Verfahrens und eine Reduzierung der Rechenleistung erzielen, beispielsweise bei Parallelverarbeitung mit mehreren Prozessorkernen.

Alternativ zu der rein parallelen Bearbeitung besteht die Möglichkeit, dass eine vollständige Abarbeitung einer Gruppe mehrerer Submatrizen erfolgt, bevor eine zweite Gruppe von Submatrizen bearbeitet wird. Diese Vorgehensweise kann mit weniger Speicher für nur eine geringere Anzahl von Korrespondenztabellen auskommen, da dieselben Korrespondenztabellen wieder benutzt werden können. Umfasst eine Gruppe n Submatrizen, so müssen lediglich n statt K (K = Anzahl aller Submatrizen; n = Anzahl der Submatrizen in der Gruppe) Korrespondenztabellen verwendet werden. Die sequentielle Abarbeitung kann auch zeilenweise über die gesamte Matrix erfolgen. Je nach Implementierung kann diese Vorgehensweise zu einer geringen Latenz führen, also zu einer geringen Zeit zwischen Eingang der Matrixelemente und Bereitstellung der gesuchten Zuordnungen bzw. Korrespondenzen.

Vorteilhafterweise ist ein Suchfeld in der Matrix vorgesehen, das eine Mehrzahl schon bearbeiteter Matrixelemente umfasst. Der Suchbereich (Suchfeld) muss nicht rechteckig gewählt sein; er kann andere Formen aufweisen, beispielsweise Kreis, Ellipse, Polygon oder Ähnliches. Vorteilhafterweise ist das Suchfeld etwas größer als eine Submatrix, beispielsweise um ein Matrixelement breiter als eine Submatrix. Aufgrund der Einteilung der Matrix in mehrere Submatrizen wird nur die Korrespondenztabelle betrachtet, deren Matrixelement in der zugehörigen Submatrix und in der zugehörigen Vergleichssubmatrix angeordnet ist. Hierdurch lässt sich der Rechenaufwand verringern und die Abarbeitung beschleunigen.

Vorteilhaft ist es, eine Zuordnung bzw. Korrespondenzbildung von Matrixelementen und Vergleichsmatrixelementen nur für solche Elemente durchzuführen, die innerhalb des Suchfeldes liegen. Hierdurch wird der Speicherbedarf und Verarbeitungsbedarf reduziert. Die Wahrscheinlichkeit, dass eine Zuordnung zwischen Elementen innerhalb des Suchfeldes die gesuchte Zuordnung ist, ist besonders hoch.

Es kann vorteilhaft sein, aus Zuordnungen zwischen den Matrixelementen und den Vergleichsmatrixelementen eine Ergebnismatrix zu erzeugen, die für die weitere Verarbeitung im gleichen oder in anderen Systemen verwendet werden kann. Vorzugsweise wird die Ergebnismatrix aus den erstellten Zuordnungen gebildet, wobei bevorzugt mehr als eine Zuordnung pro Matrixelement in der Ergebnismatrix abgelegt werden können.

Vorteilhafterweise ist die Zuordnung ein Vektor. Der Vektor wird vorteilhafterweise aus der aus dem Tabellenfeld ausgelesenen Position und der Position des aktuellen Vergleichsmatrixelements berechnet, beispielsweise aus der Differenz. Derartige Vektoren können insbesondere bei der Bildverarbeitung als optischer Fluss weiterverarbeitet werden.

Es ist vorteilhaft, dass ein Reset einer Korrespondenztabelle durchgeführt wird. Vorteilhafterweise kann ein einmaliger Reset der gesamten Korrespondenztabelle erfolgen, beispielsweise vor dem Schreibprozess. Dieser Reset kann sich auf eine oder mehrere Korrespondenztabellen beziehen. Daneben ist es möglich, einen kontinuierlichen Reset der einzelnen oder aller Korrespondenztabellen durchzuführen, beispielsweise parallel zum Schreibprozess oder parallel zum Leseprozess, d.h. jede gespeicherte Position wird bevorzugt mehrmals pro Bilddurchlauf abgearbeitet und gegebenenfalls gelöscht. Damit ergibt sich der "Durchsatz" der Reset-Funktion. Ein kontinuierlicher Reset der Korrespondenztabelle findet bevorzugt mindestens zweimal pro Bilddurchlauf statt, da in der Regel Tabelleneinträge existieren, die noch nicht gelöscht werden dürfen, weil sie noch zu Korrespondenzen führen können. Diese "Übriggebliebenen" werden bevorzugt in einem späteren, zeitversetzten Durchlauf gelöscht. Auf diese Weise werden alte Werte in den Tabellenfeldern verworfen oder gelöscht, die für eine Korrespondenzbildung nicht mehr geeignet sind.

Der Versatz für den zeitversetzten Durchlauf wird vorteilhafterweise so gewählt, dass er höchstens einer halben Bildhöhe bzw. Matrixhöhe entspricht. Beim kontinuierlichen Reset werden beispielsweise alle in der Tabelle gespeicherten Positionen in einer festgelegten Reihenfolge (z.B. aufsteigende Adresse) abgearbeitet (und ggf. gelöscht). Sind alle Adressen abgearbeitet, wird in der gleichen Reihenfolge wieder von vorne begonnen. Mindestens zwei solcher Reset-Durchläufe erfolgen pro Bilddurchlauf (bzw. Submatrix-Durchlauf), wobei der Reset unabhängig vom Bildwechsel weiter durchlaufen kann.

Beim Vorhandensein eines Suchfeldes werden die Werte innerhalb der Tabelle überschrieben, die bereits so alt sind, dass sie nicht mehr für die Zuordnungsbildung bzw. Korrespondenzbildung verwendet werden, weil sie außerhalb des Suchbereichs liegen, also der Leseprozess die entsprechenden Matrixelemente schon bearbeitet hat.

Eine Vorrichtung zum Ermitteln einer Zuordnung zwischen einem Matrixelement einer Matrix und einem Vergleichsmatrixelement einer Vergleichsmatrix, die dazu eingerichtet ist, das erfindungsgemäße Verfahren auszuführen, ist vorteilhaft und weist alle Vorteile des erfindungsgemäßen Verfahrens auf.

### Kurze Beschreibung der Zeichnungen

Nachfolgend werden Ausführungsbeispiele der Erfindung unter Bezugnahme auf die begleitende Zeichnung im Detail beschrieben. Dabei zeigen:
- Figur 1: eine Prinzipskizze der Aufteilung einer Matrix in Submatrizen und eine Vergleichsmatrix in Vergleichssubmatrizen,
- Figur 2: ein Prinzipbild der Zuordnung zwischen einer Matrix und einer Submatrix mittels Korrespondenztabellen.

### Ausführungsformen der Erfindung

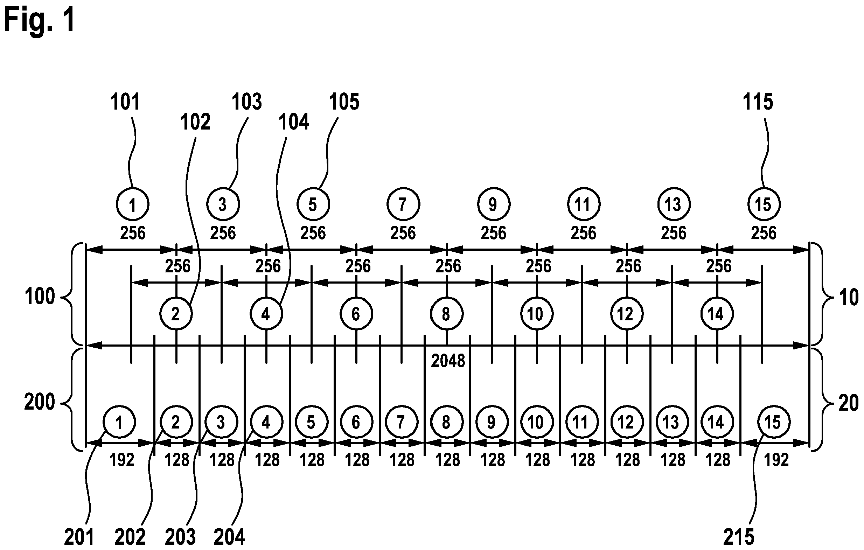

Figur 1 zeigt eine prinzipielle Aufteilung einer Matrix und einer Vergleichsmatrix in mehrere Blöcke oder Felder. Die bevorzugte Ausführungsform gemäß Figur 1 wird anhand eines ersten Bildes 10 und eines zweiten Bildes 20 beschrieben. Das erste Bild 10 entspricht einer Matrix 100; das zweite Bild 20 entspricht einer Vergleichsmatrix 200. Die Matrixelemente bzw. Vergleichsmatrixelemente entsprechen den Bildpunkten in dem ersten Bild 10 und dem zweiten Bild 20.

Gemäß Figur 1 ist das erste Bild 10, also die Matrix 100 in mehrere Submatrizen 101, 102 bis 115 aufgeteilt. Ausgehend von einem Bild 10 mit 2.048 Pixelspalten erfolgt hier eine Aufteilung in 15 Blockspalten, also 15 Submatrizen 101, 102 ... 115. Jede Submatrix umfasst 256 Spalten, also 256 Matrixelemente in einer Zeile. Zu sehen ist ein Spezialfall einer Aufteilung der Matrix 100 in Submatrizen 101, 102 ... 115, bei dem eine maximale einfache Überlappung erfolgt. Für eine Gesamtzahl K von Submatrizen 101 ... 115 gilt für 1 ≤ k ≤ K-2, dass die k-te Region bzw. Submatrix 101, 102 ... 113 gerade an die (k+2)-te Submatrix 103, 104 ... 115 angegrenzt, ohne diese zu überlappen. Daneben ist hier auch ein weiterer Spezialfall für die Aufteilung der Matrix 100 in Submatrizen 101, 102 ... 115 gezeigt, bei dem alle Submatrizen 101, 102 ... 115 die gleiche Größe haben. Diese Aufteilung ist günstig, weil somit mehrere parallele schreibende Prozesse etwa die gleiche Arbeitslast aufweisen und Korrespondenztabellen für jede Submatrix 101, 102 ... 115 etwa den gleichen Durchsatz haben. Auch die Verweilzeiten der Daten in der Korrespondenztabelle, d. h. bis sie überschrieben werden, ist einander angeglichen. Die Submatrizen 101, 102 ... 115 überlappen in Figur 1 maximal, jedoch nicht mehrfach.

Die Vergleichsmatrix 200, die das zweite Bild 20 repräsentiert, ist ebenfalls in mehrere Regionen bzw. Submatrizen 201, 202 ... 215 eingeteilt. Diese Submatrizen 201, 202... 215 überlappen nicht und grenzen direkt aneinander. Eine Überlappung ist jedoch auch möglich. Die beiden äußeren Submatrizen 201 und 215 weisen eine andere Spaltenbreite auf als die inneren Submatrizen 202, 203, 204, die jeweils 128 Spalten umfassen, was bezogen auf das zweite Bild 20 einer Breite von 128 Pixel pro Submatrix 202, 203 entspricht. Die insgesamt betrachtete Bildbreite für das erste Bild 10 und das zweite Bild 20 beläuft sich damit auf 2048 Pixel, was typisch für Bildsensoren ist.

Die Aufspaltung des zweiten Bildes 20 in mehrere Submatrizen 201, 202 ... 215 ermöglicht eine parallele Verarbeitung mehrerer Leseprozesse, die aus den jeweiligen Submatrizen 201, 202... 215 parallel oder gruppiert parallel Elemente auslesen können.

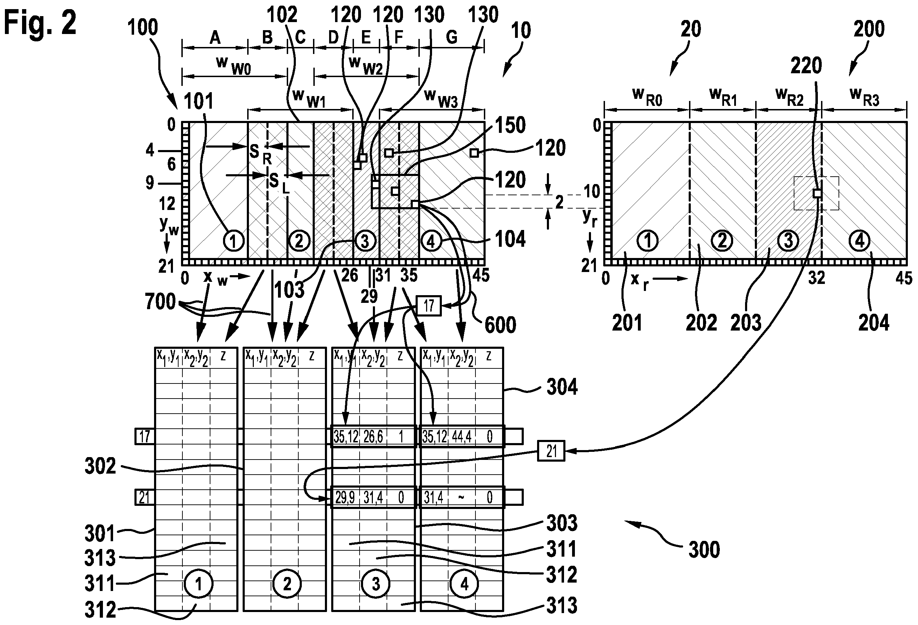

Figur 2 zeigt das Prinzip der Korrespondenzbildung mittels einer Momentaufnahme eines einfachen Ausführungsbeispiels. Dargestellt sind ein erstes Bild 10, entsprechend einer Matrix 100, ein zweites Bild 20, entsprechend der Vergleichsmatrix 200 sowie Korrespondenztabellen 300. Im vorliegenden Fall sind vier Korrespondenztabellen 301, 302, 303 und 304 vorgesehen.

Das zweite Bild 20 ist in vier Regionen aufgeteilt, was vier Submatrizen 201, 202, 203, 204 entspricht. Die Submatrizen 201 bis 204 überlappen nicht. Die Submatrizen 201 bis 204 korrespondieren mit den Korrespondenztabellen 301 bis 304, in denen die Zuordnungen und Korrespondenzen zwischen einem Matrixelement 120 der Matrix 100, also einem Bildpunkt oder Pixel des ersten Bildes 10, und einem Vergleichsmatrixelement 220 der Vergleichsmatrix 200, also einem Bildpunkt oder Pixel des zweiten Bildes 20, hergestellt werden. Da die Anzahl der Submatrizen 201 bis 204 mit der Anzahl der Korrespondenztabellen 301 bis 304 korrespondiert, führt ein Auslesen aus einer Submatrix 201 bis 204 zu einer Zuweisung in ausschließlich und exklusiv einer der Korrespondenztabellen 300, nämlich genau der Korrespondenztabelle 301 bis 304, die zu der jeweiligen Submatrix 201 bis 204 gehört.

Im vorliegenden Beispiel hat das zweite Bild 20 eine Breite von 46 Pixeln und eine Höhe von 22 Pixeln. Die Vergleichsmatrix 200 weist also 46 x 22 Vergleichsmatrixelemente 220 auf. Am linken und unteren Rand sind jeweils die Pixelraster und eine Skala angedeutet. Die Submatrizen 201... 204 weisen unterschiedliche Breiten auf. Die äußeren Submatrizen 201 und 204 sind jeweils 13 Spalten breit, umfassen also 13 Vergleichsmatrixelemente 220 pro Zeile nebeneinander, während die beiden inneren Submatrizen 202, 203 lediglich zehn Spalte aufweisen, entsprechend 10 Pixel in dem zweiten Bild 20.

Der Leseprozess in der Vergleichsmatrix 200 erfolgt sequentiell zeilenweise beginnend in der oberen linken Ecke. Zum aktuellen Zeitpunkt wird das Vergleichsmatrixelement 220 an der Position xᵣ = 32, yᵣ = 10 ausgelesen. Dieses Vergleichsmatrixelement 220 weist ein Zugriffsmerkmal mit dem Wert mᵣ = 21 auf, für das eine Korrespondenz in dem ersten Bild 10 und somit eine Zuordnung zu einem Matrixelement 120 des ersten Bildes 10 gesucht wird. Der Leseprozess erfolgt jedoch erst, wenn der Schreibprozess schon weiter fortgeschritten ist (hier bis zur Position x_{w} = 35, y_{w} = 12).

Das erste Bild 10 hat in der hier gezeigten Ausführungsform die gleiche Anzahl von Pixeln wie das zweite Bild 20, also ebenfalls 46 x 22 Pixel. Dies entspricht einer Matrix 100 mit 46 x 22 Matrixelementen. Die Matrix 100 ist in mehrere, hier gleich breite, Submatrizen 101 bis 104 aufgeteilt. Jede Submatrix 101, 104 hat 16 Spalten, entsprechend 16 Pixeln im ersten Bild 10. Die einzelnen Submatrizen 101 bis 104 korrespondieren mit den Korrespondenztabellen 301 bis 304.

Die Submatrizen 101 bis 104 überlappen derart miteinander, dass es nicht überlappende Bereiche gibt, die mit A, C, E, G gekennzeichnet sind. Die einfach überlappenden Bereiche der Submatrizen 101 bis 104 sind mit B, D und F gekennzeichnet. Mehrfachüberlappungen sind in diesem Beispiel nicht vorgesehen.

Die gestrichelten Linien, die die Grenzen der Submatrizen 201 bis 204 der Vergleichsmatrix kennzeichnen, sind auch in der Matrix 100 eingezeichnet, damit nachvollziehbar wird, wie die Überlappungen der Submatrizen 101 bis 104 zu wählen sind, so dass ein gewünschter horizontaler Suchbereich erreicht wird. Die Breiten des Suchbereichs sind mit s_{R} und s_{L} eingezeichnet. Sie geben den Suchbereich nach rechts bzw. links an. Ihre Anordnung hängt damit zusammen, dass in diesem Beispiel ein Rückwärtsfluss bestimmt werden soll, bei dem für das neuere zweite Bild 20 gefragt wird, woher aus dem (älteren) ersten Bild 10 eine Zuordnung bzw. Korrespondenz stammt. Eine Betrachtung eines Vorwärtsflusses ist ebenfalls möglich. Die Eingangsbilder wären entsprechend vertauscht, die Suchbereiche angepasst. Analoge Betrachtungen können auch für den Fall der Korrespondenzbildung bei Stereobildern angestellt werden.

In Bild 10 ist der Fortschritt der (hier sequentiellen) Abarbeitung eines Schreibprozesses, beginnend in der linken oberen Ecke der Matrix 100, ebenfalls gekennzeichnet. Aktuell befindet sich der hier eine Schreibprozess am Matrixelement 120, in der Position x_{w} = 35 und y_{w} = 12. Der Versatz zwischen dem Schreibprozess und dem Leseprozess beträgt also zwei Zeilen und drei Spalten. Um diesen Versatz eilt der Schreibprozess dem Leseprozess voraus.

Für dieses Matrixelement 120, das sich in dem Überlappungsbereich F befindet, also zwei Submatrizen 103 und 104 zugeordnet ist, erfolgt ein Schreiben der Position des Matrixelements 120 in die beiden den Submatrizen 103, 104 zugeordneten Korrespondenztabellen 303 und 304. Der Schreibprozess ist durch den Pfeil 600 gekennzeichnet.

Die Pfeile 700 in Figur 2 zeigen die Zuordnung der Submatrizen 101 bis 104 der Matrix 100 zu den Korrespondenztabellen 300, insbesondere 301 bis 304. Die insgesamt sieben Bereiche A, B, C, D, E, F und G der Submatrizen 101 bis 104 verweisen auf die vier Korrespondenztabellen 301 bis 304. Überlappende Bereiche verweisen auf jeweils zwei Korrespondenztabellen.

In Figur 2 haben die Matrixelemente 120 jeweils ein Zugriffsmerkmal, hier als Zahl dargestellt, das die Adresse der Tabellenfelder der Korrespondenztabellen 300 angibt. In dem hier gezeigten Beispiel wird aktuell das Zugriffsmerkmal des Matrixelements 120 mit dem Wert m = 17 an der Position x_{w} = 35 und y_{w} = 12 geschrieben. Die Zugriffsmerkmale der Matrixelemente 130 mit dem Wert m = 21 wurden bereits geschrieben. Die Zugriffsmerkmale verweisen auf die entsprechenden Tabellenfelder der entsprechenden Tabelle.

Die Korrespondenztabellen 300 haben in dem hier gezeigten Beispiel drei Spalten 311, 312 und 313, die exemplarisch für die Korrespondenztabelle 301 gezeigt sind. In der ersten Spalte werden die X- und Y-Koordinate eines ersten Matrixelementes 120 eingetragen, beispielsweise in die Zeile mit der Adresse 17 der Korrespondenztabellen 300. In der Spalte 312 werden die X- und Y-Koordinate eines weiteren Matrixelements 120 eingetragen, das zu einem früheren Zeitpunkt aus der Matrix 100 bzw. dem ersten Bild 10 ermittelt wurde und in der entsprechenden Korrespondenztabelle 303 abgelegt wurde. Die dritte Spalte 313 sieht eine Zusatzinformation z vor, die beispielsweise angeben kann, ob die Tabellenfelder mit den Positionsdaten der Matrixelemente 120 schon überschrieben wurden. Weitere Zusatzinformationen oder Attribute können ebenfalls in den Korrespondenztabellen 300 abgelegt werden, beispielsweise in einer weiteren Spalte.

Der schreibende Prozess, der sich auf das erste Bild 10 bezieht, befindet sich in der in Figur 2 gezeigten aktuellen Position an der Koordinate x_{w} = 35, y_{w} = 12 im Abschnitt F. Das Matrixelement 120 hat ein Zugriffsmerkmal mit dem Wert m_{w} = 17. Der schreibende Prozess trägt also die Koordinate des aktuellen Matrixelements 120 in die Adresse 17 der Korrespondenztabellen 303 und 304 ein, da das aktuelle Matrixelement 120 sowohl der Submatrix 103 wie auch der Submatrix 104 zugeordnet ist. Eine vorher an der Adresse 17 abgelegte Position eines Matrixelements 120 wird bevorzugt nicht sofort überschrieben, sondern optional als zweiter Wert aufbewahrt, nämlich in Spalte 312 der Korrespondenztabelle 303. Um den Aufwand des Umkopierens von Spalte zu Spalte zu vermeiden, kann eine Ringpufferung pro Tabellenzeile verwendet werden, so dass z.B. ein Positionsindex beispielsweise angibt, welches Feld als nächstes überschrieben wird.

Beispielsweise ist aus der Korrespondenztabelle 304 zu sehen, dass bei einem Zugriffsmerkmal m_{w} = 17 noch eine Bildkoordinate, nämlich (44,4) gespeichert ist, weil dieses Zugriffsmerkmal bereits weiter oben in der Submatrix 104 für das Matrixelement 120 auftrat.

Ähnliches gilt für die Korrespondenztabelle 303, in der noch eine weitere Position mit der Koordinate (26,6) in der Zeile mit der Adresse 17 gespeichert ist. Das noch weiter oben in der Submatrix 103 vorhandene Matrixelement 120 mit der Koordinate (27,5), die auch das Zugriffsmerkmal m_{w} = 17 hat, ist nicht mehr in der Korrespondenztabelle 303 zu finden. Ihr früheres Vorhandensein wird jedoch durch den Wert z = 1 in der Zeile mit der Adresse 17 der Korrespondenztabelle 303 gekennzeichnet.

Ein Tabellenfeld mit einer ∼ kennzeichnet den Initialzustand eines Feldes in der Korrespondenztabelle 300, der beispielsweise durch einen Reset-Vorgang oder Initialisierungsvorgang hervorgerufen sein kann.

Neben Matrixelementen 120 mit dem Zugriffsmerkmal m_{w} = 17 sind in Figur 2 in der Matrix 100 weitere Matrixelemente 130 gezeigt, die ein Zugriffsmerkmal m_{w} = 21 haben. Diese Matrixelemente 130 sind in den Abschnitten E und F angeordnet. Der Abschnitt E ist überlappungsfrei. Das Matrixelement 130 ist nur der Submatrix 103 zugeordnet. Das Matrixelement 130 im Bereich F ist den beiden Submatrizen 103 und 104 zugeordnet und deshalb in den beiden Korrespondenztabellen 303 und 304 an der Zeile mit der Adresse 21 eingetragen. Die Zusatzinformation z = 0 zeigt an, dass noch keine Überschreibung vorkam.

Das erfindungsgemäße Verfahren, bei der eine Zuordnung zwischen einem Vergleichsmatrixelement 220 und einem Matrixelement 120 mittels der Korrespondenztabellen 300 gesucht wird, wird exemplarisch anhand von Figur 2 beschrieben. Der lesende Prozess befindet sich aktuell in der Position xᵣ = 32, yᵣ = 10; diese Position wird nachfolgend als Referenzposition bezeichnet. Der Zugriffswert des Vergleichsmatrixelements 220 ist mᵣ = 21. Entsprechend liest der Leseprozess, der durch den Pfeil 800 gekennzeichnet ist, aus dem zugehörigen Tabellenfeld (Zeile mit der Adresse 21 der Korrespondenztabelle 300) die entsprechenden Werte aus. Da die Submatrix 203, in der das Vergleichsmatrixelement 220 angeordnet ist, eine Zuweisung auf die Korrespondenztabelle 303 vorsieht, wird nur in dieser Korrespondenztabelle gelesen. In dem entsprechenden Tabellenfeld an der Adresse 21 sind zwei Positionen von zwei Matrixelementen 130 enthalten. Der Leseprozess liest also die beiden Positionen (x₁, y₁) = (29,9) und (x₂, y₂) = (31,4) aus, zusätzlich zu der Zusatzinformation in Spalte 313. Es wurden also zwei Zuordnungen zu dem Vergleichsmatrixelement 220 gefunden.

In einem optionalen Schritt können die beiden Zuordnungen überprüft werden, indem beispielsweise die Differenzen zwischen der Position des lesenden Prozesses (Referenzposition) und der jeweiligen Koordinate (Position) der möglichen Zuordnungskandidaten (Matrixelement 130) gebildet werden, um somit jeweils einen Zuordnungsvektor (uᵢ, vᵢ) zu ermitteln. Dies kann beispielsweise mittels eines Suchfeldes 150 erfolgen, das in der Matrix 100 bzw. in dem ersten Bild 10 eingezeichnet ist.

In einem optionalen Schritt wird nun der Abstand von der Position des Vergleichsmatrixelements 220 zu den jeweiligen Zuordnungskandidaten ermittelt. Dies führt zu den beiden Zuordnungsvektoren (u₁, v₁) = (3,1) und (u₂, v₂) = (1,6). Als Auswahlkriterium der beiden Zuordnungskandidaten kann nun das Suchfeld 150 herangezogen werden. Eine Überprüfung zeigt, dass der Zuordnungsvektor (u₁, v₁) = (3,1) im Suchfeld 150 liegt, während der zweite Zuordnungsvektor außerhalb des Feldes 150 liegt und dieses Matrixelement 130 deshalb verworfen wird. Falls beide Zuordnungsvektoren innerhalb des Suchfelds 150 liegen, kann eine Entscheidung in einem weiteren Verarbeitungsschritt getroffen werden.

Das Suchfeld 150 darf auch unsymmetrisch bezüglich der Referenzposition des Vergleichsmatrixelements 220 sein. Es wäre auch möglich, dass die Referenzposition des Vergleichsmatrixelements 220 außerhalb des Suchfelds 150 liegt. Das Suchfeld 150 ist so angeordnet, dass der schreibende Prozess so weit fortgeschritten ist, dass alle Matrixelemente 120, die sich im Suchfeld 150 befinden, bereits abgearbeitet worden sind und ihre Position in die entsprechenden Korrespondenztabellen 300 eingetragen sind.

## Patentansprüche

1. Verfahren zur Ermittlung einer Zuordnung zwischen einem Matrixelement (120) einer Matrix (100) und einem Vergleichsmatrixelement (220) einer Vergleichsmatrix (200) mittels mehrerer Korrespondenztabellen (300), deren Tabellenfelder in einem Schreibprozess wenigstens teilweise beschrieben sind, wobei die Matrix (100) ein erstes Bild (10) ist und die Vergleichsmatrix (200) ein zweites Bild (20) ist und ein Matrixelement (120) ein Bildpunkt in dem ersten Bild (10) und ein Vergleichsmatrixelement (220) ein Bildpunkt in dem zweiten Bild (20) ist, umfassend die folgenden Schritte:
- Aufteilen der Matrix (100) in eine Mehrzahl von Submatrizen (101, ... 104), wobei jeder Submatrix (101, ... 104) eine Korrespondenztabelle (300, 301 ... 304) zugeordnet ist,
- Ausführen eines Schreibprozesses zum Schreiben der Position eines Matrixelements (120) einer Submatrix (101, 102... 104) in ein Tabellenfeld der zugeordneten Korrespondenztabelle (301, ... 304),
- Ausführen eines Leseprozesses zum Lesen der Position eines Matrixelements (120) aus einem Tabellenfeld einer Korrespondenztabelle (300, 301 ...304) und Erstellen einer Zuordnung zwischen einer Position eines Vergleichsmatrixelements (220) und eines Matrixelements,
wobei der Schreibprozess die folgenden Schritte umfasst:
- Ermitteln eines Merkmals eines Matrixelements (120) einer Submatrix (101, ... 104) der Matrix (100),
- Ermitteln eines Zugriffsmerkmals aus dem Merkmal des Matrixelements (120),
- Ermitteln eines Tabellenfeldes der zugehörigen Korrespondenztabelle (300, 301, ... 304) aus dem Zugriffsmerkmal,
- Schreiben der Position des Matrixelements (120) der Submatrix (101, ... 104) der Matrix (100) in das ermittelte Tabellenfeld der zugehörigen Korrespondenztabelle (300, 301, ... 304),
- Aufteilen der Vergleichsmatrix (200) in eine Mehrzahl von Vergleichssubmatrizen (201, ... 204), wobei jeder Vergleichssubmatrix (201, ... 204) eine der Korrespondenztabellen (301, ... 304) zugeordnet ist,
und wobei der Leseprozess die folgenden Schritte umfasst:
- Ermitteln eines Merkmals eines Vergleichsmatrixelements (220) einer Vergleichssubmatrix (201, ... 204) der Vergleichsmatrix (200),
- Ermitteln eines Zugriffsmerkmals aus dem Merkmal des Vergleichsmatrixelements (220),
- Ermitteln eines Tabellenfeldes der zugehörigen Korrespondenztabelle (301, ... 304) mittels des Zugriffsmerkmals des Vergleichsmatrixelements (220),
- Auslesen der hinterlegten Position des Matrixelements (120) aus dem ermittelten Tabellenfeld der zugehörigen Korrespondenztabelle (301, ... 304),
- Bilden einer Zuordnung zwischen der aus dem Tabellenfeld der zugehörigen Korrespondenztabelle (301, ... 304) ausgelesenen Position des Matrixelements (120) und der aktuellen Position des Vergleichsmatrixelements (220) der Vergleichsmatrix (200).

2. Verfahren gemäß Anspruch 1, **dadurch gekennzeichnet, dass** ein Versatz zwischen dem Schreibprozess und dem Leseprozess besteht und der Versatz fest oder variabel ist.

3. Verfahren gemäß einem der vorhergehenden Ansprüche, **dadurch gekennzeichnet, dass** der Versatz so gewählt ist, dass der Leseprozess dem Schreibprozess folgt.

4. Verfahren gemäß einem der vorhergehenden Ansprüche, **dadurch gekennzeichnet, dass** eine Zuweisung zwischen Matrixelement (120) und Submatrix (101, ... 104) besteht und dass eine Zuweisung zwischen Vergleichsmatrixelement (220) und Vergleichssubmatrix (201, ... 204) besteht, wobei die Zuweisungen bevorzugt jeweils in einer Lookup-Tabelle hinterlegt sind.

5. Verfahren gemäß einem der vorhergehenden Ansprüche, **dadurch gekennzeichnet, dass** ein Merkmal die Umgebung um ein Matrixelement (120) oder um ein Vergleichsmatrixelement (220) beschreibt.

6. Verfahren gemäß einem der vorhergehenden Ansprüche, **dadurch gekennzeichnet, dass** ein Zugriffsmerkmal aus dem Merkmal eines Matrixelements (120) oder eines Vergleichsmatrixelements (220) gebildet wird, wobei zur Bestimmung des Zugriffsmerkmals das gesamte Merkmal, ein Teil des Merkmals oder Merkmale mehrerer Matrixelemente (120) bzw. Vergleichsmatrixelemente (220) verwendet werden, abhängig davon, wie groß der Wertebereich des Merkmals im Vergleich zur Größe der Korrespondenztabelle (300, 301, ... 304) ist.

7. Verfahren gemäß einem der vorhergehenden Ansprüche, **dadurch gekennzeichnet, dass** ein Tabellenfeld der Korrespondenztabelle (300, 301, ... 304) weitere Attribute oder Informationen umfasst.

8. Verfahren gemäß dem vorhergehenden Anspruch, **dadurch gekennzeichnet, dass** die weiteren Attribute oder Informationen in dem Tabellenfeld mittels der Korrespondenztabelle zwischen Matrix und Vergleichsmatrix transportiert werden können.

9. Verfahren gemäß einem der vorhergehenden Ansprüche, **dadurch gekennzeichnet, dass** ein Suchfeld (150) in der Matrix (100) vorgesehen ist, das eine Mehrzahl schon bearbeiteter Matrixelemente (120) umfasst.

10. Verfahren gemäß dem vorhergehenden Anspruch, **dadurch gekennzeichnet, dass** eine Zuordnung von Matrixelementen (120) und Vergleichsmatrixelementen (220) nur für Matrixelemente (120) innerhalb des Suchfelds (150) erfolgt.

11. Verfahren gemäß einem der vorhergehenden Ansprüche, **gekennzeichnet durch** den weiteren Schritt:
- Bilden einer Ergebnismatrix aus Zuordnungen zwischen den Matrixelementen (120) und den Vergleichsmatrixelementen (220).

12. Verfahren gemäß einem der vorhergehenden Ansprüche, **dadurch gekennzeichnet, dass** die Zuordnung ein Vektor ist, der bevorzugt aus der aus dem Tabellenfeld ausgelesenen Position und der Position des aktuellen Vergleichsmatrixelements (220) berechnet wird, bevorzugt aus der Differenz.

13. Verfahren gemäß einem der vorhergehenden Ansprüche, **dadurch gekennzeichnet, dass** ein Reset der Korrespondenztabelle (300, 301, ... 304) durchgeführt wird, wobei ein einmaliger Reset der gesamten Korrespondenztabelle (300, 301, ... 304) oder ein kontinuierlicher Reset der Korrespondenztabelle (300, 301, ... 304) erfolgt.

14. Vorrichtung zur Ermittlung einer Zuordnung zwischen einem Matrixelement (120) einer Matrix (100) und einem Vergleichsmatrixelement (220) einer Vergleichsmatrix (200), die dazu eingerichtet ist, das Verfahren gemäß einem der vorhergehenden Ansprüche auszuführen.

## Claims

1. Method for determining an association between a matrix element (120) of a matrix (100) and a comparison matrix element (220) of a comparison matrix (200) by means of a plurality of correspondence tables (300), the table fields of which are at least partially written to in a writing process, wherein the matrix (100) is a first image (10) and the comparison matrix (200) is a second image (20) and a matrix element (120) is a pixel in the first image (10) and a comparison matrix element (220) is a pixel in the second image (20), comprising the following steps of:
- dividing the matrix (100) into a plurality of sub-matrices (101, ... 104), wherein a correspondence table (300, 301 ... 304) is associated with each sub-matrix (101, ... 104),
- carrying out a writing process for the purpose of writing the position of a matrix element (120) of a sub-matrix (101, 102 ... 104) to a table field of the associated correspondence table (301, ... 304),
- carrying out a reading process for the purpose of reading the position of a matrix element (120) from a table field of a correspondence table (300, 301 ... 304) and creating an association between a position of a comparison matrix element (220) and a matrix element,
wherein the writing process comprises the following steps of:
- determining a feature of a matrix element (120) of a sub-matrix (101, ... 104) of the matrix (100),
- determining an access feature from the feature of the matrix element (120),
- determining a table field of the associated correspondence table (300, 301, ... 304) from the access feature,
- writing the position of the matrix element (120) of the sub-matrix (101, ... 104) of the matrix (100) to the determined table field of the associated correspondence table (300, 301, ... 304),
- dividing the comparison matrix (200) into a plurality of comparison sub-matrices (201, ... 204), wherein one of the correspondence tables (301, ... 304) is associated with each comparison sub-matrix (201, ... 204),
and wherein the reading process comprises the following steps of:
- determining a feature of a comparison matrix element (220) of a comparison sub-matrix (201, ... 204) of the comparison matrix (200),
- determining an access feature from the feature of the comparison matrix element (220),
- determining a table field of the associated correspondence table (301, ... 304) by means of the access feature of the comparison matrix element (220),
- reading the stored position of the matrix element (120) from the determined table field of the associated correspondence table (301, ... 304),
- forming an association between the position of the matrix element (120), which has been read from the table field of the associated correspondence table (301, ... 304), and the current position of the comparison matrix element (220) of the comparison matrix (200).

2. Method according to Claim 1, **characterized in that** there is an offset between the writing process and the reading process and the offset is fixed or variable.

3. Method according to one of the preceding claims, **characterized in that** the offset is selected in such a manner that the reading process follows the writing process.

4. Method according to one of the preceding claims, **characterized in that** there is an assignment between the matrix element (120) and the sub-matrix (101, ... 104), and **in that** there is an assignment between the comparison matrix element (220) and the comparison sub-matrix (201, ... 204), wherein the assignments are preferably each stored in a lookup table.

5. Method according to one of the preceding claims, **characterized in that** a feature describes the environment around a matrix element (120) or around a comparison matrix element (220).

6. Method according to one of the preceding claims, **characterized in that** an access feature is formed from the feature of a matrix element (120) or a comparison matrix element (220), wherein the entire feature, a part of the feature or features of a plurality of matrix elements (120) or comparison matrix elements (220) is/are used to determine the access feature depending on the size of the range of values of the feature in comparison with the size of the correspondence table (300, 301, ... 304).

7. Method according to one of the preceding claims, **characterized in that** a table field of the correspondence table (300, 301, ... 304) comprises further attributes or information.

8. Method according to the preceding claim, **characterized in that** the further attributes or information in the table field can be transported between the matrix and the comparison matrix by means of the correspondence table.

9. Method according to one of the preceding claims, **characterized in that** a search field (150) is provided in the matrix (100) and comprises a plurality of matrix elements (120) which have already been processed.

10. Method according to the preceding claim, **characterized in that** matrix elements (120) and comparison matrix elements (220) are associated only for matrix elements (120) within the search field (150) .

11. Method according to one of the preceding claims, **characterized by** the further step of:
- forming a results matrix from associations between the matrix elements (120) and the comparison matrix elements (220).

12. Method according to one of the preceding claims, **characterized in that** the association is a vector which is preferably calculated from the position read from the table field and the position of the current comparison matrix element (220), preferably from the difference.

13. Method according to one of the preceding claims, **characterized in that** the correspondence table (300, 301, ... 304) is reset, wherein a one-off reset of the entire correspondence table (300, 301, ... 304) or a continuous reset of the correspondence table (300, 301, ... 304) is carried out.

14. Apparatus for determining an association between a matrix element (120) of a matrix (100) and a comparison matrix element (220) of a comparison matrix (200), which apparatus is set up to carry out the method according to one of the preceding claims.

## Revendications

1. Procédé de détermination d'une affectation entre un élément de matrice (120) d'une matrice (100) et un élément de matrice de comparaison (220) d'une matrice de comparaison (200) au moyen de plusieurs tables de correspondance (300) dont les champs de table sont au moins partiellement écrits lors d'un processus d'écriture, dans lequel la matrice (100) est une première image (10) et la matrice de comparaison (200) est une seconde image (20) et un élément de matrice (120) est un pixel dans la première image (10) et un élément de matrice de comparaison (220) est un pixel dans la seconde image (20), comprenant les étapes suivantes :
- diviser la matrice (100) en une pluralité de sous-matrices (101, ... 104), dans lequel une table de correspondance (300, 301... 304) est affectée à chaque sous-matrice (101, ... 104),
- exécuter un processus d'écriture pour écrire la position d'un élément de matrice (120) d'une sous-matrice (101, 102... 104) dans un champ de table de la table de correspondance (301, ... 304) affectée,
- exécuter un processus de lecture pour lire la position d'un élément de matrice (120) dans un champ de table d'une table de correspondance (300, 301... 304) et établir une affectation entre une position d'un élément de matrice de comparaison (220) et d'un élément de matrice, dans lequel le processus d'écriture comprend les étapes suivantes :
- déterminer une caractéristique d'un élément de matrice (120) d'une sous-matrice (101, ... 104) de la matrice (100),
- déterminer une caractéristique d'accès à partir de la caractéristique de l'élément de matrice (120),
- déterminer un champ de table de la table de correspondance (300, 301, ... 304) associée à partir de la caractéristique d'accès,
- écrire la position de l'élément de matrice (120) de la sous-matrice (101, ... 104) de la matrice (100) dans le champ de table déterminé de la table de correspondance (300, 301, ... 304) associée,
- diviser la matrice de comparaison (200) en une pluralité de sous-matrices de comparaison (201, ... 204), dans lequel l'une des tables de correspondance (301, ... 304) est affectée à chaque sous-matrice de comparaison (201, ... 204),
et dans lequel le processus de lecture comprend les étapes suivantes :
- déterminer une caractéristique d'un élément de matrice de comparaison (220) d'une matrice de comparaison (201, ... 204) de la matrice de comparaison (200),
- déterminer une caractéristique d'accès à partir de la caractéristique de l'élément de matrice de comparaison (220),
- déterminer un champ de table de la table de correspondance (301, ... 304) associée au moyen de la caractéristique d'accès de l'élément de matrice de comparaison (220),
- lire la position stockée de l'élément de matrice (120) dans le champ de table déterminé de la table de correspondance (301, ... 304) associée,
- créer une affectation entre la position de l'élément de matrice (120) lu dans le champ de table de la table de correspondance (301, ... 304) associée et la position actuelle de l'élément de matrice de comparaison (220) de la matrice comparaison (200).

2. Procédé selon la revendication 1, **caractérisé en ce qu'**il existe un décalage entre le processus d'écriture et le processus de lecture et **en ce que** le décalage est fixe ou variable.

3. Procédé selon l'une des revendications précédentes, **caractérisé en ce que** le décalage est sélectionné de manière à ce que le processus de lecture suive le processus d'écriture.

4. Procédé selon l'une des revendications précédentes, **caractérisé en ce qu'**il existe une affectation entre un élément de matrice (120) et une sous-matrice (101, ... 104) et **en ce qu'**il existe une affectation entre un élément de matrice de comparaison (220) et une sous-matrice de comparaison (201, ... 204), dans lequel les affectations sont de préférence respectivement stockées dans une table de consultation.

5. Procédé selon l'une des revendications précédentes, **caractérisé en ce qu'**une caractéristique décrit l'environnement d'un élément de matrice (120) ou d'un élément de matrice de comparaison (220).

6. Procédé selon l'une des revendications précédentes, **caractérisé en ce qu'**une caractéristique d'accès est créée à partir de la caractéristique d'un élément de matrice (120) ou d'un élément de matrice de comparaison (220), dans lequel, pour déterminer la caractéristique d'accès, on utilise la totalité de la caractéristique, une partie de la caractéristique ou des caractéristiques de plusieurs éléments de matrice (120) ou éléments de matrice de comparaison (220) en fonction de la taille de la plage de valeurs de la caractéristique par comparaison à la taille de la table de correspondance (300, 301, ... 304).

7. Procédé selon l'une des revendications précédentes, **caractérisé en ce qu'**un champ de table de la table de correspondance (300, 301, ... 304) comprend d'autres attributs ou informations.

8. Procédé selon la revendication précédente, **caractérisé en ce que** les autres attributs ou informations contenus dans le champ de table peuvent être transportés entre la matrice et la matrice de comparaison au moyen de la table de correspondance.

9. Procédé selon l'une des revendications précédentes, **caractérisé en ce qu'**il est prévu dans la matrice (100) un champ de recherche (150) qui comprend une pluralité d'éléments de matrice (120) déjà traités.

10. Procédé selon la revendication précédente, **caractérisé en ce qu'**une affectation d'éléments de matrice (120) et d'éléments de matrice de comparaison (220) n'est effectuée que pour des éléments de matrice (120) situés à l'intérieur du champ de recherche (150).

11. Procédé selon l'une des revendications précédentes, **caractérisé par** l'étape supplémentaire suivante :
- créer une matrice de résultats à partir d'affectations entre les éléments de matrice (120) et les éléments de matrice de comparaison (220).

12. Procédé selon l'une des revendications précédentes, **caractérisé en ce que** l'affectation est un vecteur qui est de préférence calculé à partir de la position lue dans le champ de table et de la position de l'élément de matrice de comparaison (220) actuel, de préférence à partir de la différence.

13. Procédé selon l'une des revendications précédentes, **caractérisé en ce qu'**une réinitialisation de la table de correspondance (300, 301, ... 304) est effectuée, dans lequel une réinitialisation unique de la totalité de la table de correspondance (300, 301, ... 304) ou une réinitialisation continue de la table de correspondance (300, 301, ... 304) est effectuée.

14. Dispositif de détermination d'une affectation entre un élément de matrice (120) d'une matrice (100) et un élément de matrice de comparaison (220) d'une matrice de comparaison (200), qui est conçu pour mettre en oeuvre le procédé selon l'une des revendications précédentes.
